# EUROPEAN PATENT APPLICATION

(11) **EP 4 748 603 A1**
(43) Date of publication of application: **27.05.2026**
(21) Application number: 25210337.9
(22) Date of filing: 22.10.2025
(51) Int. Cl.: B60K 1/04

(54) **PROTECTIVE STRUCTURE OF BATTERY PACK**

(30) Priority: 20.11.2024 JP 2024202316
(71) Applicant: Suzuki Motor Corporation, Shizuoka 432-8611 (JP)
(72) Inventor: HOSOKAWA, Kazuki, HAMAMATSU-SHI, 432-8611 (JP); KIUCHI, Seita, HAMAMATSU-SHI, 432-8611 (JP); KAWAI, Ikumi, HAMAMATSU-SHI, 432-8611 (JP)
(74) Representative: Plasseraud IP

(57) **Abstract**

[Problem to be Solved]

To provide a protective structure of a battery pack (10), the protective structure being capable of protecting the battery pack (10) from a load acting on the battery pack (10) from the rear.

[Solution]

An inner surface of an upper surface (45) of a cover (40) is provided with first ribs (47A) that extend forward from the rear end of the upper surface (45) of the cover (40), an inner surface of a rear surface (42) of the cover (40) is provided with second ribs (47B) that are continuous with the first ribs (47A), and that extend downward from the first ribs (47A) at the rear end of the upper surface (45) of the cover (40), and each first rib (47A) includes a protruding part (47C) that protrudes downward to a position at which an exhaust gas duct (20) faces the rear surface (42) of the cover (40) in the front-rear direction. The lower end of the protruding part (47C) is located at a position lower than the upper end of the exhaust gas duct (20) in the up-down direction of the vehicle (1), and a shortest distance (D1) between the protruding part (47C) and a bracket (30) is set to be shorter than a shortest distance (D2) between the second rib (47B) and the exhaust gas duct (20).

## Description

### [Technical Field]

The present invention relates to a protective structure of a battery pack.

### [Background Art]

Patent Literature 1 discloses a cooling structure of a battery for a vehicle in which a battery is mounted on a floor panel, wherein the battery is disposed in a space surrounded by a closed cross-section member mounted on the floor panel, the closed cross-section member is in communication with the outside of the vehicle, and the closed cross-section member has an air discharge hole formed at a predetermined position that corresponds to the battery. In this cooling structure of the battery for the vehicle, the closed cross-section member is constituted of side sill parts, a plurality of front and rear cross member parts, and a floor tunnel part, and the battery is surrounded by these components. In addition, seat fixing parts are provided to the cross member parts, and a seat is disposed above the battery.

### [Citation List]

### [Patent Literature]

[Patent Literature 1] JP2000-233648A

### [Summary of Invention]

### [Technical Problem]

However, in the conventional technique described in Patent Literature 1, there is a risk of a battery pack being damaged due to a load acting on the battery pack from the rear. That is, in the technique described in Patent Literature 1, the battery is mounted below the front seat and hence, there is a risk that a load may act on the battery pack from the rear due to a rear seat occupant placing their feet on or kicking the battery pack, thereby damaging the battery pack.

The present invention has been made by focusing on the above-mentioned problem, and it is an object of the present invention to provide a protective structure of a battery pack, the protective structure being capable of protecting the battery pack from a load acting on the battery pack from the rear.

### [Solution to Problem]

The present invention is directed to a protective structure of a battery pack for a vehicle, the vehicle including: a floor panel forming a floor surface of a cabin; a battery pack disposed on an upper surface of the floor panel on one side in a vehicle width direction below a front seat; a bracket configured to cover the battery pack, and fixed to the floor panel; a discharge port formed in the floor panel on one side of the bracket in the vehicle width direction, the discharge port being in communication with an outside of the cabin below the floor panel; and an exhaust gas duct including a battery coupling part, a discharge port coupling part, and a hose part, and configured to discharge gas generated in the battery pack to the outside of the cabin, the battery coupling part being coupled to a rear surface of the battery pack, the discharge port coupling part being coupled to the discharge port, the hose part coupling the battery coupling part and the discharge port coupling part to each other, the protective structure being characterized in that the discharge port is formed in the floor panel in a vicinity of one side surface of the bracket in the vehicle width direction, the hose part extends from the battery coupling part toward one side in the vehicle width direction along a rear surface of the bracket, is bent at a position of one end portion of the bracket in the vehicle width direction to extend toward a front side of the vehicle, and is then coupled to the discharge port coupling part, the bracket and the exhaust gas duct are covered by a cover from above and from a side, an upper surface of the cover faces the bracket and the exhaust gas duct in an up-down direction of the vehicle, a rear surface of the cover faces the bracket and the exhaust gas duct in a front-rear direction of the vehicle, an inner surface of the upper surface of the cover is provided with a first rib that extends forward from a rear end of the upper surface of the cover, an inner surface of the rear surface of the cover is provided with a second rib that is continuous with the first rib, and that extends downward from the first rib at the rear end of the upper surface of the cover, the first rib includes a protruding part that protrudes downward to a position at which the exhaust gas duct faces the rear surface of the cover in the front-rear direction, a lower end of the protruding part is located at a position lower than an upper end of the exhaust gas duct in the up-down direction of the vehicle, and a shortest distance between the protruding part and the bracket is set to be shorter than a shortest distance between the second rib and the exhaust gas duct.

### [Advantageous Effect of Invention]

As described above, according to the present invention, it is possible to provide a protective structure of a battery pack, the protective structure being capable of protecting the battery pack from a load acting on the battery pack from the rear.

### [Brief Description of Drawings]

[Figure 1] Figure 1 is a plan view of a vehicle equipped with a protective structure of a battery pack according to one embodiment of the present invention.
[Figure 2] Figure 2 is a perspective view of a battery pack and a cover, the battery pack being equipped with the protective structure of the battery pack according to one embodiment of the present invention.
[Figure 3] Figure 3 is a perspective view of the battery pack equipped with the protective structure of the battery pack according to one embodiment of the present invention.
[Figure 4] Figure 4 is a plan view of the battery pack and the cover, the battery pack being equipped with the protective structure of the battery pack according to one embodiment of the present invention.
[Figure 5] Figure 5 is a back view of the battery pack and the cover, the battery pack being equipped with the protective structure of the battery pack according to one embodiment of the present invention.
[Figure 6] Figure 6 is a perspective view showing an inner surface of the cover for the battery pack equipped with the protective structure of the battery pack according to one embodiment of the present invention.
[Figure 7] Figure 7 is a cross-sectional view of the protective structure of the battery pack shown in Figure 4, taken along VII-VII, and as viewed in the direction of arrows.

### [Description of Embodiment]

A protective structure of a battery pack according to one embodiment of the present invention is a protective structure of a battery pack for a vehicle, the vehicle including: a floor panel forming a floor surface of a cabin; a battery pack disposed on an upper surface of the floor panel on one side in a vehicle width direction below a front seat; a bracket configured to cover the battery pack, and fixed to the floor panel; a discharge port formed in the floor panel on one side of the bracket in the vehicle width direction, the discharge port being in communication with an outside of the cabin below the floor panel; and an exhaust gas duct including a battery coupling part, a discharge port coupling part, and a hose part, and configured to discharge gas generated in the battery pack to the outside of the cabin, the battery coupling part being coupled to a rear surface of the battery pack, the discharge port coupling part being coupled to the discharge port, the hose part coupling the battery coupling part and the discharge port coupling part to each other, the protective structure being characterized in that the discharge port is formed in the floor panel in a vicinity of one side surface of the bracket in the vehicle width direction, the hose part extends from the battery coupling part toward one side in the vehicle width direction along a rear surface of the bracket, is bent at a position of one end portion of the bracket in the vehicle width direction to extend toward a front side of the vehicle, and is then coupled to the discharge port coupling part, the bracket and the exhaust gas duct are covered by a cover from above and from a side, an upper surface of the cover faces the bracket and the exhaust gas duct in an up-down direction of the vehicle, a rear surface of the cover faces the bracket and the exhaust gas duct in a front-rear direction of the vehicle, an inner surface of the upper surface of the cover is provided with a first rib that extends forward from a rear end of the upper surface of the cover, an inner surface of the rear surface of the cover is provided with a second rib that is continuous with the first rib, and that extends downward from the first rib at the rear end of the upper surface of the cover, the first rib includes a protruding part that protrudes downward to a position at which the exhaust gas duct faces the rear surface of the cover in the front-rear direction, a lower end of the protruding part is located at a position lower than an upper end of the exhaust gas duct in the up-down direction of the vehicle, and a shortest distance between the protruding part and the bracket is set to be shorter than a shortest distance between the second rib and the exhaust gas duct. With such a configuration, the protective structure of the battery pack according to one embodiment of the present invention can protect the battery pack from a load acting on the battery pack from the rear.

### [Embodiment]

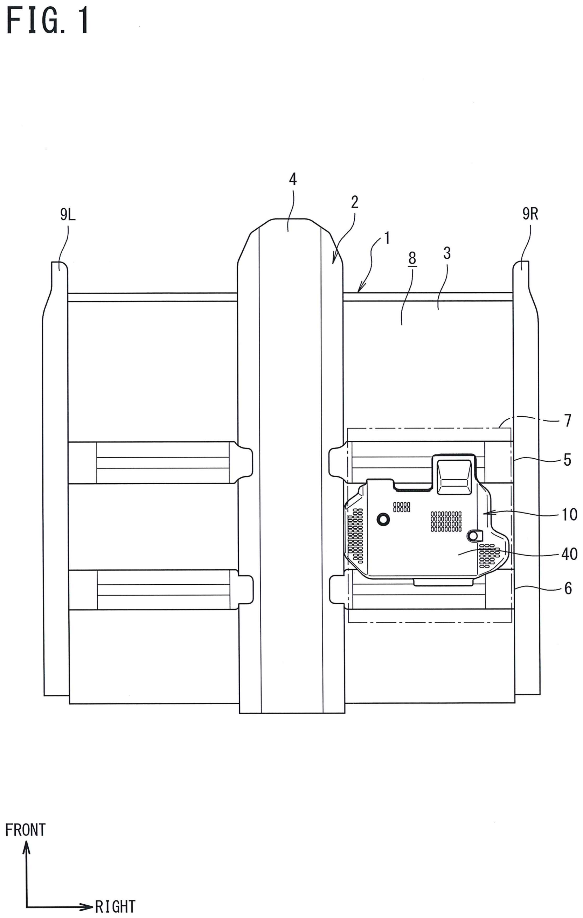

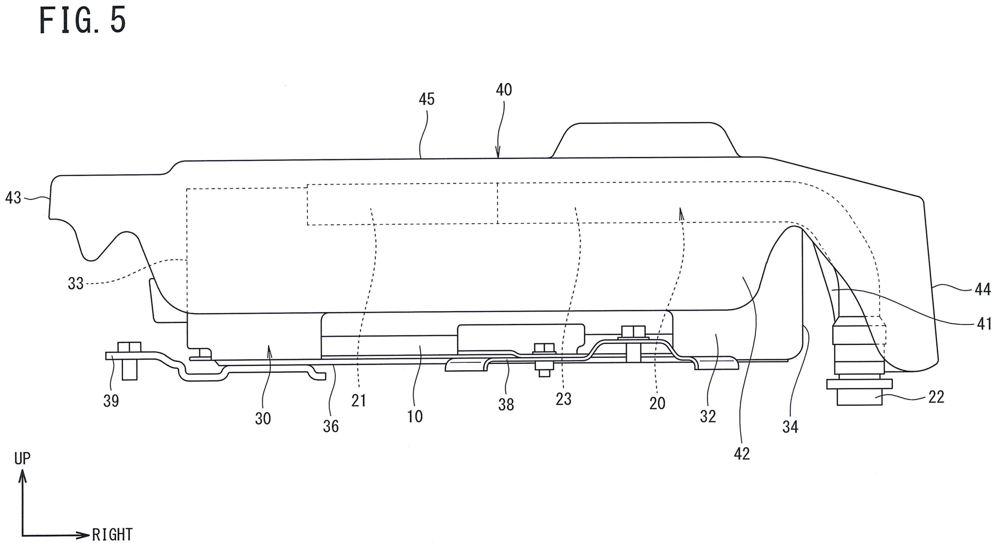

Hereinafter, a protective structure of a battery pack according to one embodiment of the present invention will be described with reference to drawings. Figure 1 to Figure 7 are diagrams showing the protective structure of the battery pack according to one embodiment of the present invention. In Figure 1 to Figure 7, the directions indicated by "up", "down", "right", and "left" refer to directions as viewed from the driver's seat.

First, the configuration will be described. In Figure 1, a vehicle 1 includes a vehicle body 2. The vehicle body 2 includes a floor panel 3, and the floor panel 3 forms the floor surface of a cabin 8.

A floor tunnel 4 extending in the front-rear direction is provided at the center portion of the floor panel 3 in the vehicle width direction. The floor tunnel 4 protrudes upward in a trapezoidal shape. Left and right side sills 9L, 9R extending in the front-rear direction are provided at both end portions of the floor panel 3 in the vehicle width direction.

Seat cross members 5, 6 extending in the vehicle width direction are provided to the floor panel 3.

The seat cross members 5, 6 support front seats 7 via seat rails not shown in the drawing.

The seat cross members 5, 6 are connected to the floor tunnel 4 and the left and right side sills 9L, 9R, and protrude upward in a trapezoidal shape. The seat cross members 6 are disposed behind the seat cross members 5.

The right front seat 7 is disposed on the upper surface of the floor panel 3 on one side (right side) in the vehicle width direction. The area on the one side (right side) in the vehicle width direction on the upper surface of the floor panel 3 refers to a portion that is located on the floor panel 3, and is surrounded by the floor tunnel 4 and the right side sill 9R. A battery pack 10 is disposed on the upper surface of the floor panel 3 below the front seat 7.

The battery pack 10 is disposed between the front and rear seat cross members 5, 6. The battery pack 10 is an assembled battery formed by combining a plurality of battery modules, each of which is formed of a plurality of cells not shown in the drawing. The battery pack 10 supplies electric power of 48 V, for example, to electric components, a motor, and other components not shown in the drawing of the vehicle 1.

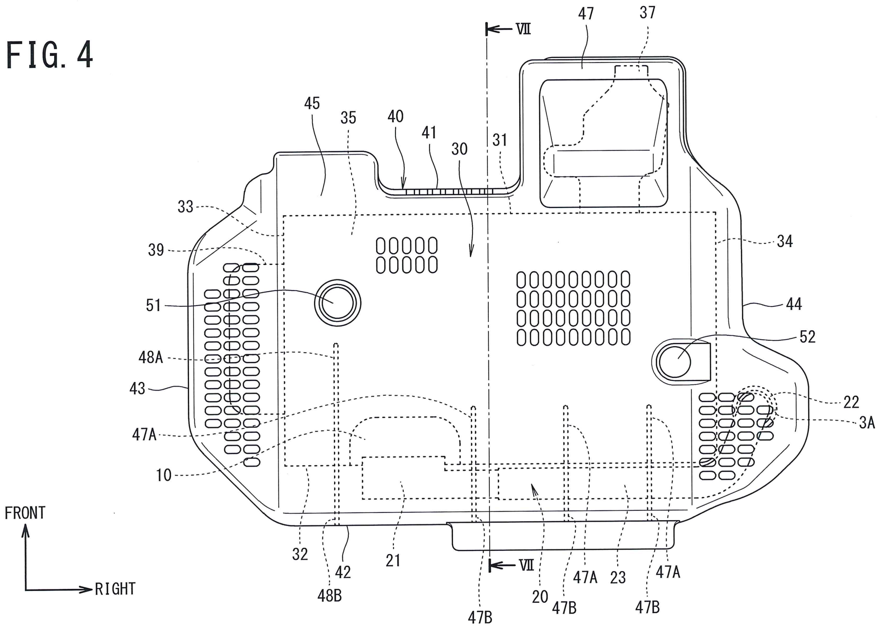

The floor panel 3 has a discharge port 3A (see Figure 4). The discharge port 3A is in communication with an outside of the cabin below the floor panel 3. The discharge port 3A is formed in the floor panel 3 in the vicinity of one side surface (right side surface) of a bracket 30 in the vehicle width direction.

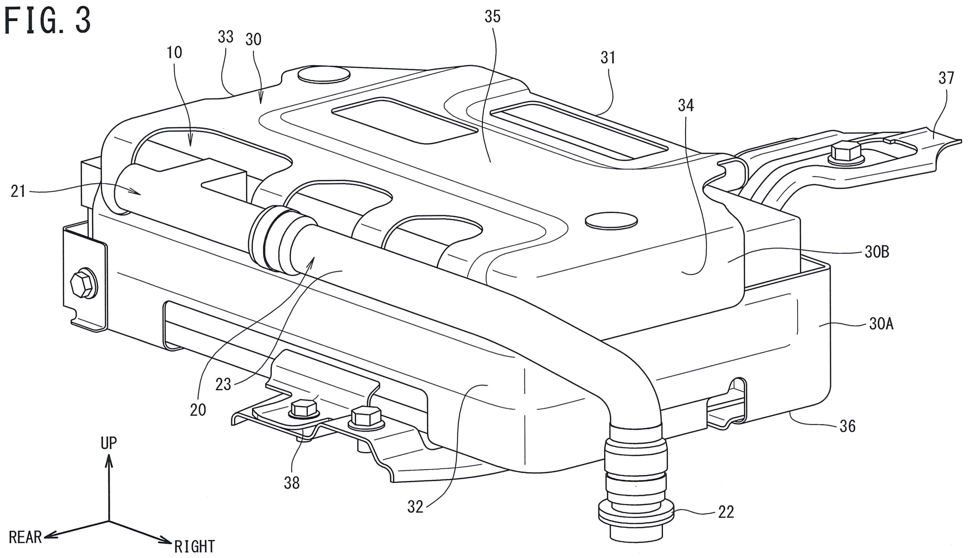

In Figure 3, the battery pack 10 is covered by the bracket 30. The bracket 30 is fixed to the floor panel 3.

In Figure 1, Figure 2, Figure 4, and Figure 5, the battery pack 10 covered by the bracket 30 is further covered by a cover 40 made of resin.

In Figure 3, Figure 4, and Figure 5, the bracket 30 includes a front surface 31, a rear surface 32, a left side surface 33, a right side surface 34, an upper surface 35, and a bottom surface 36, the front surface 31 covering the front surface of the battery pack 10, the rear surface 32 covering the rear surface of the battery pack 10, the left side surface 33 covering the left side surface of the battery pack 10, the right side surface 34 covering the right side surface of the battery pack 10, the upper surface 35 covering the upper surface of the battery pack 10, the bottom surface 36 covering the bottom surface of the battery pack 10.

The bracket 30 also includes a front leg part 37, a rear leg part 38, and a left leg part 39, the front leg part 37 being fixed to the upper surface of the seat cross member 5, the rear leg part 38 being fixed to the upper surface of the floor panel 3 in the vicinity of the rear side of the battery pack 10, the left leg part 39 being fixed to the upper surface of the floor panel 3 in the vicinity of the left side of the battery pack 10.

The bracket 30 also includes a lower bracket 30A and an upper bracket 30B, the lower bracket 30A covering the bottom surface and the lower portions of the side surfaces of the battery pack 10, the upper bracket 30B covering the upper surface and the upper portions of the side surfaces of the battery pack 10, and overlapping with the lower bracket on the side surfaces of the battery pack 10.

In Figure 3, an exhaust gas duct 20 is coupled to the battery pack 10, and the exhaust gas duct 20 discharges gas generated in the battery pack 10 to the outside of the cabin. The exhaust gas duct 20 includes a battery coupling part 21, a discharge port coupling part 22, and a hose part 23, the battery coupling part 21 being coupled to the rear surface of the battery pack 10, the discharge port coupling part 22 being coupled to the discharge port 3A, the hose part 23 coupling the battery coupling part 21 and the discharge port coupling part 22 to each other. The battery coupling part 21 and the discharge port coupling part 22 are made of hard resin, and the hose part 23 is made of rubber.

The hose part 23 extends from the battery coupling part 21 toward one side in the vehicle width direction along the rear surface 32 of the bracket 30, is bent at the position of one end portion of the bracket 30 in the vehicle width direction to extend toward the front side of the vehicle, and is then coupled to the discharge port coupling part 22.

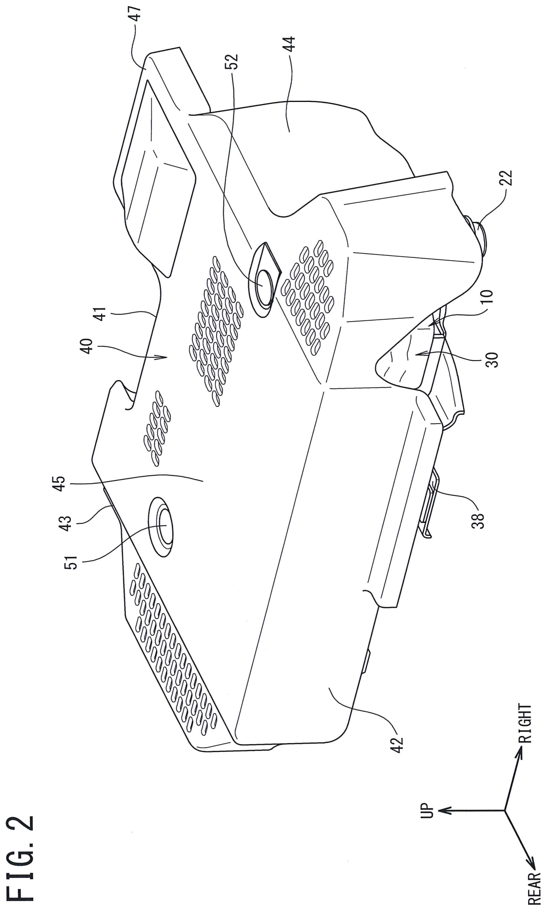

In Figure 2, Figure 4, and Figure 5, the bracket 30 and the exhaust gas duct 20 are covered by the cover 40 from above and from the side.

A front surface 41 of the cover 40 covers the bracket 30 from the front, and faces the front surface 31 of the bracket 30 in the front-rear direction of the vehicle.

A rear surface 42 of the cover 40 covers the bracket 30 from the rear, and faces the rear surface 32 of the bracket 30 and the exhaust gas duct 20 in the front-rear direction of the vehicle.

A left side surface 43 of the cover 40 covers the bracket 30 from the left, and faces the left side surface 33 of the bracket 30 in the vehicle width direction.

A right side surface 44 of the cover 40 covers the bracket 30 from the right, and faces the right side surface 34 of the bracket 30 in the vehicle width direction.

An upper surface 45 of the cover 40 covers the bracket 30 from above, and faces the upper surface 35 of the bracket 30 and the exhaust gas duct 20 in the up-down direction of the vehicle.

As shown in Figure 2 and Figure 4, a portion of the upper surface 45 of the cover 40 that is located in the vicinity of the left end portion of the upper surface 45 is fixed by a clip 51 to a portion of the upper surface 35 of the bracket 30 that is located in the vicinity of the left end portion of the upper surface 35. Further, a portion of the upper surface 45 of the cover 40 that is located in the vicinity of the right end portion of the upper surface 45 is fixed by a clip 52 to a portion of the upper surface 35 of the bracket 30 that is located in the vicinity of the right end portion of the upper surface 35. Furthermore, a portion of the front surface 41 of the cover 40 that is located in the vicinity of the right end portion of the front surface 41 forms a projecting part 47 that projects forward, and this projecting part 47 covers the front leg part 37 of the bracket 30 from above. A triangular protrusion that is engaged with the front end portion of the front leg part 37 and not shown in the drawing is formed on the inner surface of the front end portion of the projecting part 47, and the projecting part 47 of the cover 40 is locked by the front leg part 37. As described above, the cover 40 is fixed to the bracket 30 at three positions.

As shown in Figure 4, Figure 6, and Figure 7, in the present embodiment, the inner surface of the upper surface 45 of the cover 40 is provided with first ribs 47A that extend forward from the rear end of the upper surface 45 of the cover 40. The inner surface of the rear surface 42 of the cover 40 is provided with second ribs 47B that are continuous with the first ribs 47A, and that extend downward from the first ribs 47A at the rear end of the upper surface 45 of the cover 40.

Three first ribs 47A are disposed at positions that face the exhaust gas duct 20 in the up-down direction. Three second ribs 47B are disposed at positions that face the exhaust gas duct 20 in the front-rear direction.

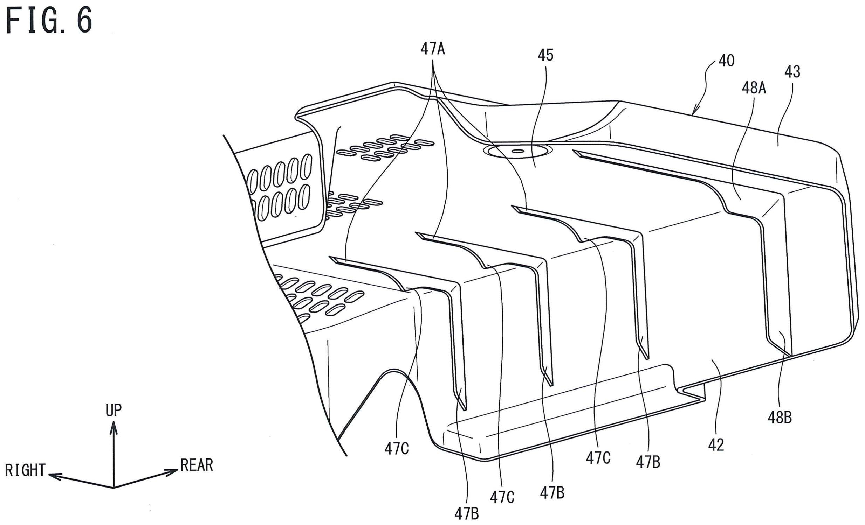

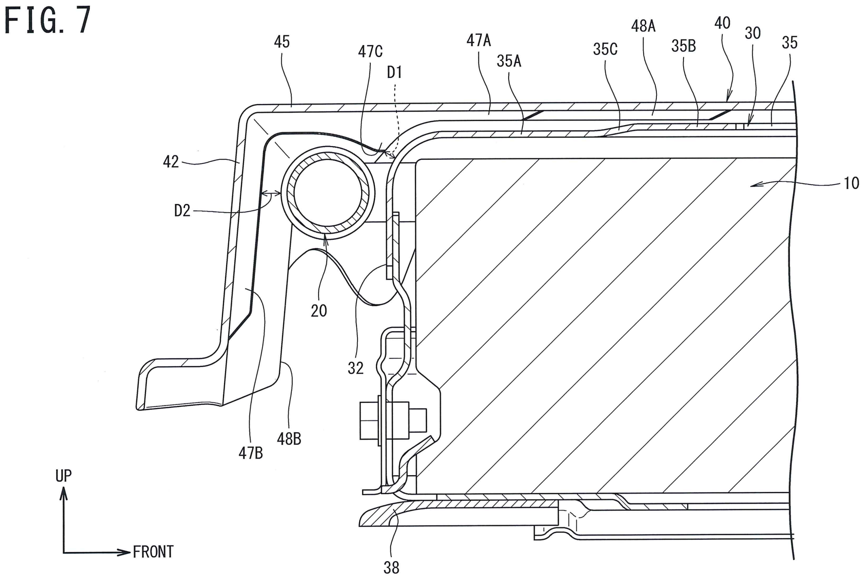

In Figure 6 and Figure 7, each first rib 47A includes a protruding part 47C that protrudes downward to a position at which the exhaust gas duct 20 faces the rear surface 42 of the cover 40 in the front-rear direction. The lower end of the protruding part 47C is located at a position lower than the upper end of the exhaust gas duct 20 in the up-down direction of the vehicle.

In Figure 7, a shortest distance D1 between the protruding part 47C and the bracket 30 is set to be shorter than a shortest distance D2 between the second rib 47B and the exhaust gas duct 20.

The rear surface 42 of the cover 40 is inclined rearward and away from the exhaust gas duct 20 as the rear surface 42 extends downward.

The upper surface of the bracket 30 includes a first upper surface 35A, a second upper surface 35B, and a boundary part 35C, the first upper surface 35A being in close proximity to and facing the first ribs 47A in the up-down direction, the second upper surface 35B being disposed at a position higher than the first upper surface 35A, the boundary part 35C forming a stepped portion between the first upper surface 35A and the second upper surface 35B.

The seat cross member 6, which extends in the vehicle width direction to support the front seat 7, is provided on the upper surface of the floor panel 3 at the rear end of the battery pack 10, and the lower end of the rear surface 42 of the cover 40 is disposed in the vicinity of the upper side of the seat cross member 6.

The inner surface of the rear surface 42 of the cover 40 is provided with a third rib 48B that is continuous with the rear end of the upper surface 45 of the cover 40, and that extends downward from the upper end to the lower end of the rear surface 42 of the cover 40.

The inner surface of the upper surface 45 of the cover 40 is provided with a fourth rib 48A that is continuous with the third rib 48B, and that extends forward from the rear end of the upper surface 45 of the cover 40. The third rib 48B and the fourth rib 48A are disposed at positions that face the exhaust gas duct 20 in neither the front-rear direction nor the up-down direction, so that the third rib 48B and the fourth rib 48A do not interfere with the exhaust gas duct 20.

As described above, in the present embodiment, the discharge port 3A is formed in the floor panel 3 in the vicinity of one side surface of the bracket 30 in the vehicle width direction, and the hose part 23 extends from the battery coupling part 21 toward one side in the vehicle width direction along the rear surface 32 of the bracket 30, is bent at the position of one end portion of the bracket 30 in the vehicle width direction to extend toward the front side of the vehicle, and is then coupled to the discharge port coupling part 22. The bracket 30 and the exhaust gas duct 20 are covered by the cover 40 from above and from the side, the upper surface 45 of the cover 40 faces the bracket 30 and the exhaust gas duct 20 in the up-down direction of the vehicle, and the rear surface 42 of the cover 40 faces the bracket 30 and the exhaust gas duct 20 in the front-rear direction of the vehicle. Further, the inner surface of the upper surface 45 of the cover 40 is provided with the first ribs 47A that extend forward from the rear end of the upper surface 45 of the cover 40. The inner surface of the rear surface 42 of the cover 40 is provided with the second ribs 47B that are continuous with the first ribs 47A, and that extend downward from the first ribs 47A at the rear end of the upper surface 45 of the cover 40. Each first rib 47A includes the protruding part 47C that protrudes downward to the position at which the exhaust gas duct 20 faces the rear surface 42 of the cover 40 in the front-rear direction. The lower end of each protruding part 47C is located at a position lower than the upper end of the exhaust gas duct 20 in the up-down direction of the vehicle, and the shortest distance D1 between the protruding part 47C and the bracket 30 is set to be shorter than the shortest distance D2 between the second rib 47B and the exhaust gas duct 20.

With such a configuration, rigidity of the rear portion of the cover 40 is increased by the first ribs 47A and the second ribs 47B and hence, it is possible to suppress deformation of the rear portion of the cover 40 caused by a rear seat occupant placing their feet on or kicking the rear portion of the cover 40, and thus it is possible to protect the exhaust gas duct 20 disposed behind the bracket 30. In addition, the shortest distance D1 between the protruding part 47C and the bracket 30 is set to be shorter than the shortest distance D2 between the second rib 47B and the exhaust gas duct 20 and hence, when the rear surface 42 of the cover 40 is deformed due to a load caused by a rear seat occupant placing their feet on or kicking the cover 40, the bracket 30 comes into contact with the protruding parts 47C and receives the load before the second rib 47B comes into contact with the exhaust gas duct 20. Accordingly, it is possible to suppress a situation in which the second rib 47B comes into contact with the exhaust gas duct 20. As a result, it is possible to protect the battery pack from the load acting on the battery pack 10 from the rear.

In the present embodiment, the rear surface 42 of the cover 40 is inclined rearward and away from the exhaust gas duct 20 as the rear surface 42 extends downward.

With such a configuration, a long distance can be ensured between the rear surface 42 of the cover 40 and the exhaust gas duct 20 at the position at which the rear surface 42 of the cover 40 faces the exhaust gas duct 20 in the front-rear direction and hence, it is possible to suppress a situation in which the second rib 47B comes into contact with the exhaust gas duct 20.

In the present embodiment, the upper surface of the bracket 30 includes the first upper surface 35A, the second upper surface 35B, and the boundary part 35C, the first upper surface 35A being in close proximity to and facing the first ribs 47A in the up-down direction, the second upper surface 35B being disposed at a position higher than the first upper surface 35A, the boundary part 35C forming a stepped portion between the first upper surface 35A and the second upper surface 35B.

With such a configuration, it is possible to ensure a long length of the first ribs 47A in the front-rear direction of the vehicle and hence, the strength of the cover 40 can be increased. In addition, the stepped portion forming the boundary part 35C between the first upper surface 35A and the second upper surface 35B having different heights serves as a reinforcing bead and hence, it is possible to increase rigidity of the upper surface of the bracket 30.

The stepped portion forming the boundary part 35C allows the first ribs 47A to be formed on the cover 40 while preventing interference of the upper surface of the bracket 30 with the first ribs 47A on the upper surface 45 of the cover 40 and hence, the upper surface of the cover 40 can be maintained at a low position, and thus it is possible to prevent an increase in the size of the battery pack 10, including the cover 40.

In the present embodiment, the seat cross member 6, which extends in the vehicle width direction to support the front seat 7, is provided on the upper surface of the floor panel 3 at the rear end of the battery pack 10, and the lower end of the rear surface 42 of the cover 40 is disposed in the vicinity of the upper side of the seat cross member 6.

With such a configuration, when the rear surface 42 of the cover 40 is displaced downward due to a load caused by a rear seat occupant placing their feet on or kicking the cover 40, the seat cross member 6 can receive the rear surface 42, thereby preventing the rear surface 42 of the cover 40 from being significantly further displaced downward and hence, it is possible to suppress a situation in which the second rib 47B comes into contact with the exhaust gas duct 20.

In the present embodiment, the inner surface of the rear surface 42 of the cover 40 is provided with the third rib 48B that is continuous with the rear end of the upper surface 45 of the cover 40, and that extends downward from the upper end to the lower end of the rear surface 42 of the cover 40.

With such a configuration, rigidity of the entire rear surface 42 is increased by the third rib 48B that extends from the upper end to the lower end of the rear surface 42 of the cover 40 and hence, it is possible to suppress a situation in which the second rib 47B comes into contact with the exhaust gas duct 20 due to deflection or deformation of the rear surface 42 in a state in which the rear surface 42 is displaced downward due to a load, thereby abutting the seat cross member 6.

Although the embodiment of the present invention has been disclosed, it is apparent that modifications may be applied by those who are skilled in the art without departing from the scope of the present invention. All of such modifications and equivalents are intended to be encompassed by the following claims.

### [Reference Signs List]

1 vehicle, 3 floor panel, 3A discharge port, 6 seat cross member, 7 front seat, 8 cabin, 10 battery pack, 20 exhaust gas duct, 21 battery coupling part, 22 discharge port coupling part, 23 hose part, 30 bracket, 32 rear surface, 34 right side surface (one side surface in vehicle width direction), 35 upper surface, 35A first upper surface, 35B second upper surface, 35C boundary part, 40 cover, 42 rear surface, 45 upper surface, 47A first rib, 47B second rib, 47C protruding part, 48B third rib, D1 shortest distance, D2 shortest distance

## Claims

1. A protective structure of a battery pack (10) for a vehicle (1), the vehicle (1) including:
a floor panel (3) forming a floor surface of a cabin (8);
a battery pack (10) disposed on an upper surface of the floor panel (3) on one side in a vehicle width direction below a front seat (7);
a bracket (30) configured to cover the battery pack (10), and fixed to the floor panel (3);
a discharge port (3A) formed in the floor panel (3) on one side of the bracket (30) in the vehicle width direction, the discharge port (3A) being in communication with an outside of the cabin (8) below the floor panel (3); and
an exhaust gas duct (20) including a battery coupling part (21), a discharge port coupling part (22), and a hose part (23), and configured to discharge gas generated in the battery pack (10) to the outside of the cabin (8), the battery coupling part (21) being coupled to a rear surface of the battery pack (10), the discharge port coupling part (22) being coupled to the discharge port (3A), the hose part (23) coupling the battery coupling part (21) and the discharge port coupling part (22) to each other, the protective structure being **characterized in that**
the discharge port (3A) is formed in the floor panel (3) in a vicinity of one side surface of the bracket (30) in the vehicle width direction,
the hose part (23) extends from the battery coupling part (21) toward one side in the vehicle width direction along a rear surface (32) of the bracket (30), is bent at a position of one end portion of the bracket (30) in the vehicle width direction to extend toward a front side of the vehicle (1), and is then coupled to the discharge port coupling part (22),
the bracket (30) and the exhaust gas duct (20) are covered by a cover (40) from above and from a side,
an upper surface (45) of the cover (40) faces the bracket (30) and the exhaust gas duct (20) in an up-down direction of the vehicle (1),
a rear surface (42) of the cover (40) faces the bracket (30) and the exhaust gas duct (20) in a front-rear direction of the vehicle (1),
an inner surface of the upper surface (45) of the cover (40) is provided with a first rib (47A) that extends forward from a rear end of the upper surface (45) of the cover (40),
an inner surface of the rear surface (42) of the cover (40) is provided with a second rib (47B) that is continuous with the first rib (47A), and that extends downward from the first rib (47A) at the rear end of the upper surface (45) of the cover (40),
the first rib (47A) includes a protruding part (47C) that protrudes downward to a position at which the exhaust gas duct (20) faces the rear surface (42) of the cover (40) in the front-rear direction,
a lower end of the protruding part (47C) is located at a position lower than an upper end of the exhaust gas duct (20) in the up-down direction of the vehicle (1), and
a shortest distance (D1) between the protruding part (47C) and the bracket (30) is set to be shorter than a shortest distance (D2) between the second rib (47B) and the exhaust gas duct (20).

2. The protective structure of a battery pack (10) as claimed in claim 1, wherein the rear surface (42) of the cover (40) is inclined rearward and away from the exhaust gas duct (20) as the rear surface (42) extends downward.

3. The protective structure of a battery pack (10) as claimed in claim 1 or claim 2, wherein
an upper surface (35) of the bracket (30) includes a first upper surface (35A), a second upper surface (35B), and a boundary part (35C), the first upper surface (35A) being in close proximity to and facing the first rib (47A) in the up-down direction, the second upper surface (35B) being disposed at a position higher than the first upper surface (35A), the boundary part (35C) forming a stepped portion between the first upper surface (35A) and the second upper surface (35B).

4. The protective structure of a battery pack (10) as claimed in claim 2, wherein
a seat cross member (6) is provided on the upper surface of the floor panel (3) at a rear end of the battery pack (10), the seat cross member (6) extending in the vehicle width direction to support the front seat (7), and
a lower end of the rear surface (42) of the cover (40) is disposed in a vicinity of an upper side of the seat cross member (6).

5. The protective structure of a battery pack (10) as claimed in claim 4, wherein the inner surface of the rear surface (42) of the cover (40) is provided with a third rib (48B) that is continuous with the rear end of the upper surface (45) of the cover (40), and that extends downward from an upper end to the lower end of the rear surface (42) of the cover (40).
